# EUROPÄISCHE PATENTSCHRIFT

(11) **EP 2 899 715 B1**
(45) Veröffentlichungstag und Bekanntmachung des Hinweises auf die Patenterteilung: **04.05.2016**
(21) Anmeldenummer: 14152649.1
(22) Anmeldetag: 27.01.2014
(51) Int. Cl.: G09F 13/18, G09F 23/00

(54) **Anzeigeelement für eine elektronische Baugruppe und elektronische Baugruppe**
Display element for an electronic assembly and electronic assembly
Élément d'affichage pour un module électrique et module électronique

(43) Veröffentlichungstag der Anmeldung: 29.07.2015
(73) Patentinhaber: Siemens Aktiengesellschaft, 80333 München (DE)
(72) Erfinder: Görlich, Stefan, 92278 Illschwang (DE); Kutsovska, Mariya, 85055 Ingolstadt (DE); Reinhard, Alexander, 92224 Amberg (DE)

(56) Entgegenhaltungen:
- EP-A1- 2 085 800
- WO-A1-2011/144484
- JP-A- 2011 154 230
- US-A1- 2012 298 492

## Beschreibung

Die Erfindung betrifft eine elektronische Baugruppe mit einem Gehäuse und einer Ausnehmung in der ein Anzeigeelement angeordnet ist. Das Anzeigeelement für die elektronische Baugruppe ist ausgestaltet als eine Lichtwellenleiteranordnung, umfassend ein erstes Lichtwellenleiterteil mit einer ersten Lichtaufnahmefläche und einer ersten Lichtabgabefläche, ein zweites Lichtwellenleiterteil mit einer zweiten Lichtaufnahmefläche und einer zweiten Lichtabgabefläche, wobei das erste Lichtwellenleiterteil und das zweite Lichtwellenleiterteil einander gegenüberstehend angeordnet sind. Bei elektronischen Baugruppen, insbesondere bei elektronischen Baugruppen für die industrielle Prozessautomatisierung, werden für einen Anwender der elektronischen Baugruppen Möglichkeiten vorgesehen, um die jeweilige elektronische Baugruppe, sowie auch an der elektronischen Baugruppe angeordneten Schnittstellen, zu beschriften bzw. zu kennzeichnen. Bei elektronischen Baugruppen mit einer erhöhten Schutzart (z.B. IP 65/IP 67) werden Kennzeichnungsschilder durch Kunststoffschilder realisiert, welche der Anwender der elektronischen Baugruppe individuell beschriften kann und anschließend auf oder an der elektroni schen Baugruppe montieren kann.

In dem Handbuch "Siemens, SIMATIC, Dezentrale Peripherie, Dezentrales Peripheriegerät, ET 200eco, 03/2013, A5E00158714-03", wird eine elektronische Baugruppe als ein dezentrales Peripheriegerät für die industrielle Prozessautomatisierung, insbesondere für die Kommunikation, aufgezeigt. Bei diesen elektronischen Peripheriegeräten gibt es pro Gerät üblicherweise mehrere Kanäle bzw. Schnittstellen, wobei für die Kanäle jeweils ein Kennzeichnungsschild vorgesehen ist. Die Kennzeichnungsschilder werden in der Gehäuseoberfläche des Gerätes an einer vorgesehenen Position verrastet. Dazu ist an der betreffenden Stelle in der Gehäuseoberfläche ein Hinterschnitt notwendig, in dem das Kennzeichnungsschild verrasten kann. Eine Befestigung und eine Platzierung der Kennzeichnungsschilder auf Geräten mit höherer Schutzart (IP 65/ IP 67) stellt immer wieder ein Problem dar, da keine Feuchtigkeit in das Gerät eindringen darf.

Bisher wurden die Kennzeichnungsschilder direkt im betreffenden Gehäuse des Gerätes verrastet. Dazu wird der erforderliche Hinterschnitt auf zwei Arten erzeugt: Bei Metallgehäusen, die z.B. in einem Druckgussverfahren gefertigt werden, wird der Hinterschnitt durch eine nachträgliche mechanische Bearbeitung eingebracht.

Bei Kunststoffgehäusen, die beispielsweise in einem Spritzgussverfahren gefertigt werden, wird der Hinterschnitt entweder durch einen aufgrund des geringen Hinterschnitts vereinfacht aufgebauten Innenschieber oder durch eine Zwangsentformung hergestellt. Eine Entformung des Hinterschnitts von Innen ist nicht möglich, da dadurch die Schutzart nicht mehr gewährleistet ist.

Dokument US 2012/0298492 ist als nächsliegender Stand der Technik angesehen.

Es ist Aufgabe der vorliegenden Erfindung ein Anzeigeelement mit Kennzeichnungsschild für eine elektronische Baugruppe bereitzustellen, bei welchem eine Fertigung vereinfacht wird und dennoch die geforderte Schutzart hinsichtlich eines Wasserstrahls oder zeitweiliges Untertauchen gewährleistet ist.

Die Aufgabe wird durch die Bereitstellung eines neuartigen Anzeigeelementes für eine elektronische Baugruppe gelöst, wobei das Anzeigeelement ausgestaltet ist, als eine Lichtleiteranordnung, umfassend ein erstes Lichtwellenleiterteil mit einer ersten Lichtaufnahmefläche und einer ersten Lichtabgabefläche, ein zweites Lichtwellenleiterteil mit einer zweiten Lichtaufnahmefläche und einer zweiten Lichtabgabefläche, wobei das erste Lichtwellenleiterteil und das zweite Lichtwellenleiterteil einander gegenüberstehend angeordnet sind, wobei an einer Innenseite des ersten Lichtwellenleiterteils ein erstes Führungsmittel und an einer Innenseite des zweiten Lichtwellenleiterteils ein zweites Führungsmittel angeordnet ist, wobei die jeweiligen Innenseiten derart zueinander angeordnet sind, dass ein Kennzeichnungsschild mittels des ersten und des zweiten Führungsmittels befestigbar ist. In der Regel sind auf den betreffenden elektronischen Baugruppen oder bei den industriellen Peripheriegeräten Lichtleiter vorhanden, die die Anzeigen, beispielsweise von LEDs, welche auf einer Flachbaugruppe angeordnet sind, nach außen führen. Bei den elektronischen Baugruppen mit einer höheren Schutzart (IP 65/ IP 67) sind die Lichtleiter bei Metallgehäusen eingepresst oder bei Kunststoffgehäusen umspritzt. Bei dem Umspritzen wird ein Mehrkomponenten oder Zweikomponentenspritzgussverfahren verwendet, wobei ein 2K-Teil entsteht. Die zu umspritzenden Lichtleiter werden meist in einem separaten Fertigungsschritt vorab gefertigt, dadurch ist ein Gestaltungsspielraum für die Formgebung der Lichtwellenleiteranordnung bzw. des Anzeigeelements größer.

Erfindungsgemäß ist nun ein Anzeigeelement bereitgestellt, welches die Integration einer Befestigungsstelle für das Kennzeichnungsschild in die Lichtleiteranordnung ermöglicht. An der Lichtleiteranordnung kann durch eine entsprechende Gestaltung bezogen auf ein Spritzgussverfahren der erforderliche Hinterschnitt für eine Verrastung des Kennzeichnungsschildes in Entformungsrichtung und dadurch einfacher erzeugt werden als im eigentlichen Gehäuse. Dabei ist die geforderte Schutzart (IP 65/IP 67) beispielsweise Dichtheit gegen zeitweiliges Untertauchen gewährleistet, da die Lichtleiteranordnung mit der integrierten Befestigungsstelle für das Kennzeichnungsschild im Gehäuse der elektronischen Baugruppe umspritzt oder eingepresst wird.

In einer vorteilhaften Ausgestaltung wird das als Befestigungsstelle ausgestaltete Führungsmittel als eine sich über die Innenseite längs erstreckenden Nut ausgestaltet.

Weiterhin ist es vorteilhaft, wenn an den Innenseiten eine Auflagekante für das Kennzeichnungsschild verläuft.

Im Hinblick auf ein Kunststoffspritzgussteil für die Lichtwellenleiteranordnung ist es vorteilhaft, wenn das erste Lichtwellenleiterteil und das zweite Lichtwellenleiterteil mit einem Mittelteil verbunden sind und die Lichtwellenleiteranordnung als ein Kunststoffteil einstückig ausgebildet ist.

Um die erforderliche Schutzart zu erreichen, ist das Anzeigeelement derart ausgebildet, dass es in einer Ausnehmung eines Gehäuses der elektronischen Baugruppe derart platziert ist, dass die Ausnehmung durch die Lichtwellenleiteranordnung abgedichtet wird.

Ebenfalls wird die eingangs genannte Aufgabe durch eine elektronische Baugruppe mit einem Gehäuse und einer Ausnehmung in der ein Anzeigeelement nach einem der Ansprüche 1 bis 5 angeordnet ist, gelöst.

Dabei ist das erste Lichtwellenleiterteil mit seiner ersten Lichtaufnahmefläche über einer ersten Lichtquelle und das zweite Lichtwellenleiterteil mit seiner zweiten Lichtaufnahmefläche über einer zweiten Lichtquelle im Inneren des Gehäuses angeordnet, wobei die Ausnehmung und das Anzeigeelement derart zusammengefügt sind, dass das Innere des Gehäuses an dem Einbauort des Anzeigeelementes gegen Strahlwasser oder zeitweiliges Untertauchen geschützt ist.

Mit der Zeichnung wird ein Ausführungsbeispiel erklärt, wobei die
- FIG 1: ein Anzeigeelement mit Kennzeichnungsschild in einer Schnittdarstellung,
- FIG 2: einen perspektivischen Ausschnitt aus einer elektronischen Baugruppe mit einem Anzeigeelement,
- FIG 3: eine Draufsicht auf eine elektronische Baugruppe mit mehreren Anzeigeelementen und mehreren zugehörigen Schnittstellen,
- FIG 4: eine dreidimensionale Darstellung des Anzeigeelementes und
- FIG 5: eine dreidimensionale Darstellung eines Kennzeichnungsschildes zeigt.

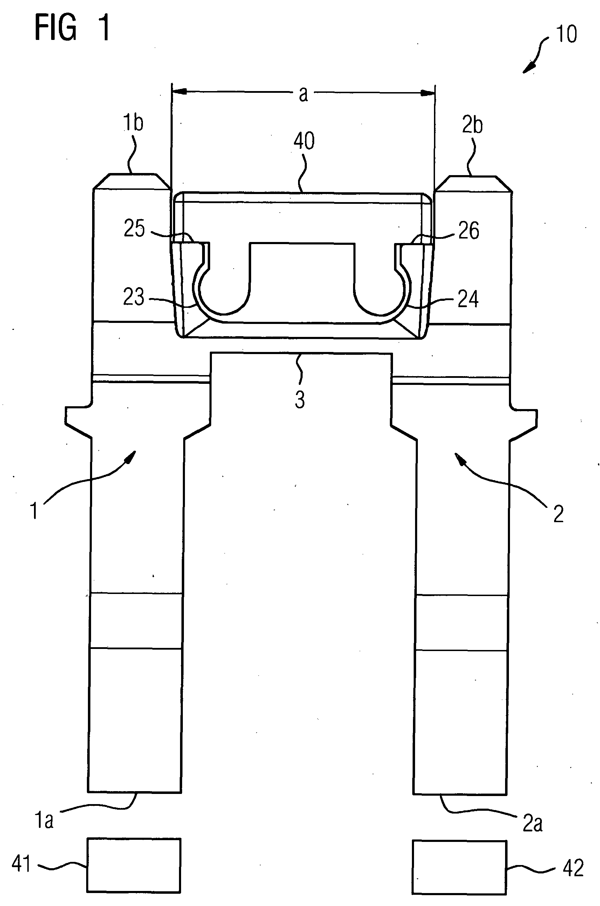

Gemäß FIG 1 ist ein Anzeigeelement 10 für eine elektronische Baugruppe 20 dargestellt. Das Anzeigeelement 10 ist als eine Lichtwellenleiteranordnung, umfassend ein erstes Lichtwellenleiterteil 1 mit einer ersten Lichtaufnahmefläche 1a und einer ersten Lichtabgabefläche 1b, ein zweites Lichtwellenleiterteil 2 mit einer zweiten Lichtaufnahmefläche 2a und einer zweiten Lichtabgabefläche 2b ausgestaltet. Das erste Lichtwellenleiterteil 1 und das zweite Lichtwellenleiterteil 2 sind parallel in einem Abstand a zu einander angeordnet.

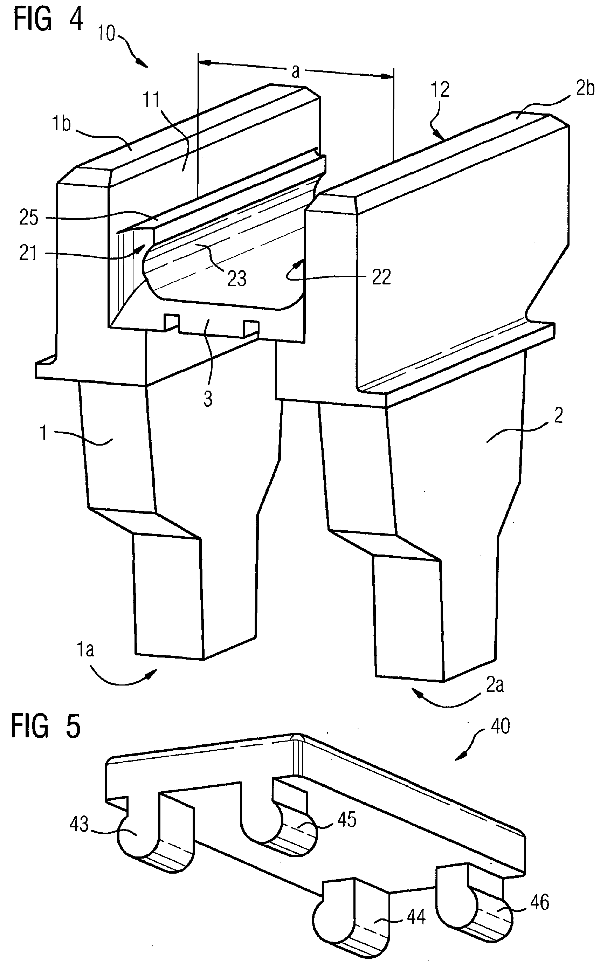

Für die weitere Beschreibung des Anzeigeelementes 10 werden nun die FIG 1 und die FIG 4 gleichzeitig betrachtet. An einer Innenseite 11 des ersten Lichtwellenleiterteils 1 ist ein erstes Führungsmittel 21 und an einer Innenseite 12 des zweiten Lichtwellenleiterteils 2 ist ein zweites Führungsmittel 22 angeordnet, wobei die jeweiligen Innenseiten 11,12 derart zueinander angeordnet sind, dass ein Kennzeichnungsschild 40 mittels des ersten und zweiten Führungsmittels 21,22 befestigbar ist. Das erste Führungsmittel 21 ist in einer Ausgestaltungsvariante als eine sich über die Innenseite 11 parallel zur Lichtabgabefläche 1b längs erstreckender Nut 23 ausgestaltet. Ebenso ist das zweite Führungsmittel 22 als sich eine über die Innenseite 12 parallel zur Lichtabgabefläche 2b längs erstreckender Nut 24 ausgestaltet. In derart angeordneten längserstreckenden Nuten innerhalb der Lichtwellenleiteranordnung lässt sich das Kennzeichnungsschild 40 von oben durch leichten Druck einrasten.

Da in der Regel auf einer elektronischen Baugruppe 20 bisher immer Statusanzeigen wie z.B. LEDs und Kennzeichnungsschilder getrennt angeordnet wurden, erreicht man mit dem Anzeigeelement 10 nun ein vereinfachtes Fertigungsverfahren der elektronischen Baugruppe 20 und zusätzlich wird auf einer Front der elektronischen Baugruppe 20 Platz gespart. Die erste Lichtabgabefläche 1b und die zweite Lichtabgabefläche 2b dienen als die eigentlichen Anzeigen für eine unter der Lichtwellenleiteranordnung angeordnete erste Lichtquelle 41 und eine zweite Lichtquelle 42. Die erste Lichtquelle 41 strahlt ihr ausgesendetes Licht auf die erste Lichtaufnahmefläche la und die zweite Lichtquelle 42 strahlt ihr Licht auf die zweite Lichtaufnahmefläche 2a.

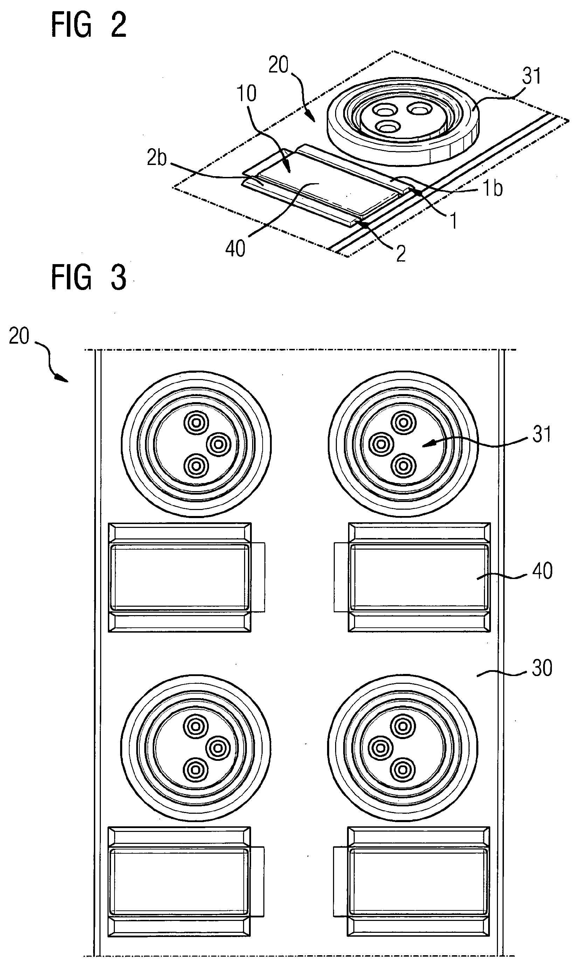

Die FIG 2 zeigt einen Ausschnitt in perspektivischer Darstellung aus einer elektronischen Baugruppe 20. In dem Gehäuse 20 ist das Anzeigeelement 10 unterhalb der Schnittstelle 31 angeordnet. Zwischen dem ersten Lichtleiterteil 1 und dem zweiten Lichtleiterteil 2 ist das Kennzeichnungsschild 40 angeordnet. Hierdurch wird eine verbesserte Zuordnung des Kennzeichnungsschildes zu der entsprechenden Kanalstatusanzeige der Schnittstelle 31 erreicht. Weiterhin können durch den ersten Lichtleiterteil 1 und dem zweiten Lichtleiterteil 2 eine zweikanalige Kanalstatusanzeige eindeutig dem Kennzeichnungsschild zugeordnet werden.

Insbesondere bei elektronischen Baugruppen der dezentralen Peripherie für die Prozessautomatisierung trägt die elektronische Baugruppe 20 mehrere Schnittstellen, wobei jeder Schnittstelle 31 je ein Anzeigeelement 10 mit einem Kennzeichnungsschild 40 zugeordnet ist, wie es die FIG 3 zeigt.

Gemäß FIG 4 ist das Anzeigeelement 10 in einer dreidimensionalen Darstellung als ein Spritzgusskunststoffteil gezeigt. Das erste Lichtwellenleiterteil 1 und das zweite Lichtwellenleiterteil 2 sind durch einen Mittelteil 3 miteinander verbunden. Das Mittelteil 3 weist an seiner Unterseite zusätzliche Längsriefen auf, welche bei einem Integrieren in ein Gehäuse durch ein Spritzgussverfahren die Haftfähigkeit des Anzeigeelementes an einem Teil einer Gehäuseoberfläche verbessert. Bei dem Einsatz des Anzeigeelementes 10 gemäß FIG 4 werden in einem Gehäuse zwei Ausnehmungen vorgesehen durch die die Schenkel des ersten Lichtwellenleiters 1 und des zweiten Lichtwellenleiters 2 hindurchgesteckt werden. Der Mittelteil 3 liegt somit auf einen Teil der Gehäuseoberfläche auf.

FIG 5 zeigt ein Kennzeichnungsschild 40 zum Einrasten in das erste Führungsmittel 21 und das zweite Führungsmittel 22 des Anzeigeelementes 10. Zum sicheren Einrasten des Kennzeichnungsschildes 40 in die als Nuten ausgestalteten Führungsmittel 21,22 weist das Kennzeichnungsschild ein erstes Verrastmittel 43, ein zweites Verrastmittel 44, ein drittes Verrastmittel 45 und ein viertes Verrastmittel 46 auf. Die Verrastmittel 43,44,45,46 sind jeweils als Füsse ausgestaltet, welche eine Formgebung haben, welche exakt zu der Längsnut der Führungsmittel 21,22 passen.

## Patentansprüche

1. Elektronische Baugruppe (20) mit einem Gehäuse (30) und einer Ausnehmung in der ein Anzeigeelement (10) angeordnet ist, wobei das Anzeigeelement ausgestaltet ist als eine Lichtwellenleiteranordnung, umfassend
- ein erstes Lichtwellenleiterteil (1) mit einer ersten Lichtaufnahmefläche (1a) und einer ersten Lichtabgabefläche (1b),
- ein zweites Lichtwellenleiterteil (2) mit einer zweiten Lichtaufnahmefläche (2a) und einer zweiten Lichtabgabefläche (2b),
wobei das erste Lichtwellenleiterteil (1) und das zweite Lichtwellenleiterteil (2) einander gegenüberstehend angeordnet sind, wobei an
- einer Innenseite (11) des ersten Lichtwellenleiterteils (1) ein erstes Führungsmittel (21) und an
- einer Innenseite (12) des zweiten Lichtwellenleiterteils (2) ein zweites Führungsmittel (22) angeordnet ist,
wobei die jeweiligen Innenseiten (11,12) derart zueinander angeordnet sind, dass ein Kenzeichnungschild (40) mittels des ersten und zweiten Führungsmittels (21,22) befestigbar ist, wobei das erste Lichtwellenleiterteil (1) mit seiner ersten Lichtaufnahmefläche (1a) über einer ersten Lichtquelle (41) und das zweite Lichtwellenleiterteil (2) mit seiner zweiten Lichtaufnahmefläche (2a) über einer zweiten Lichtquelle (42) im Inneren des Gehäuses angeordnet ist, wobei die Ausnehmung und das Anzeigeelement (10) derart zusammengefügt sind, dass das Innere des Gehäuses (30) an dem Einbauort des Anzeigeelementes (10) gegen Strahlwasser oder zeitweiliges Untertauchen geschützt ist.

2. Elektronische Baugruppe (20) nach Anspruch 1, wobei zumindest ein Führungsmittel (21,22) als sich eine über die Innenseite (11,12) längs erstreckende Nut (23,24) ausgestaltet ist.

3. Elektronische Baugruppe (20) nach Anspruch 1 oder 2, wobei an den Innenseiten (11,12) eine Auflagekannte (25,26) für das Kennzeichnungschild (40) verläuft.

4. Elektronische Baugruppe (20) nach einem der Ansprüche 1. bis 3, wobei das erste Lichtwellenleiterteil (1) und das zweite Lichtwellenleiterteil (2) mit einem Mittelteil (3) verbunden sind und die Lichtwellenleiteranordnung als ein Kunststoffteil einstückig ausgebildet ist.

5. Elektronische Baugruppe (20) nach einem der Ansprüche 1 bis 4, derart ausgebildet, dass es in der Ausnehmung des Gehäuses (30) der elektronischen Baugruppe (20) derart platzierbar ist, dass die Ausnehmung durch die Lichtwellenleiteranordnung abgedichtet wird.

## Claims

1. Electronic module (20) with a housing (30) and a recess in which a display element (10) is disposed, wherein the display element is embodied as an optical waveguide arrangement, comprising
- a first optical waveguide part (1) with a first light-receiving surface (1a) and a first light-emitting surface (1b),
- a second optical waveguide part (2) with a second light-receiving surface (2a) and a second light-emitting surface (2b),
wherein the first optical waveguide part (1) and the second optical waveguide part (2) are disposed opposite one another, wherein
- a first guide means (21) is arranged on an inner side (11) of the first optical waveguide part (1) and
- a second guide means (22) is arranged on an inner side (12) of the second optical waveguide part (2),
wherein the respective inner sides (11, 12) are disposed in relation to one another such that the designation label (40) is able to be fastened by means of the first and second guide means (21, 22), wherein the first optical waveguide part (1) with its first light-receiving surface (1a) is disposed over a first light source (41) and the second optical waveguide part (2) with its second light-receiving surface (2a) is disposed over a second light source (42) within the housing, wherein the recess and the display element (10) are joined together such that the inside of the housing (30), at the installation location of the display element (10), is protected from splash water or from temporary submersion.

2. Electronic module (20) according to claim 1, wherein at least one guide means (21, 22) is embodied as a slot (23, 24) extending lengthwise along the inner side (11, 12).

3. Electronic module (20) according to claim 1 or 2, wherein a contact edge (25, 26) for the designation label (40) runs on the inner sides (11, 12).

4. Electronic module (20) according to one of claims 1 to 3, wherein the first optical waveguide part (1) and the second optical waveguide part (2) are connected to a central part (3) and the optical waveguide arrangement is embodied in one piece as a plastic part.

5. Electronic module (20) according to one of claims 1 to 4, embodied such that it is able to be placed in the recess of the housing (30) of the electronic module (20) such that the recess is sealed by the optical waveguide arrangement.

## Revendications

1. Module (20) électronique ayant un boîtier (30) et un évidement dans lequel est disposé un élément (10) d'affichage, l'élément d'affichage étant conformé sous la forme d'un agencement de guide d'ondes lumineuses, comprenant
- une première partie de guide d'ondes lumineuses ayant une première surface (1a) de réception de la lumière et une première surface (1b) d'émission de la lumière,
- une deuxième partie (2) de guide d'ondes lumineuses ayant une deuxième surface (2a) de réception de la lumière et une deuxième surface (2b) d'émission de la lumière,
la première partie (1) de guide d'ondes lumineuses et la deuxième partie (2) de guide d'ondes lumineuses étant disposées en face l'une de l'autre, dans lequel il est disposé
- sur un côté (11) intérieur de la première partie (1) de guide d'ondes lumineuses un premier moyen (21) de guidage et
- sur un côté (12) intérieur de la deuxième partie (2) de guide d'ondes lumineuses un deuxième moyen (22) de guidage, les côtés (11, 12) intérieurs respectifs étant disposés l'un par rapport à l'autre de manière à pouvoir fixer une plaque (40) de caractérisation à l'aide du premier et du deuxième moyens (21, 22) de guidage, la première partie (1) de guide d'ondes lumineuses étant disposée à l'intérieur du boîtier en ayant sa première surface (1a) de réception de la lumière sur une première source (41) lumineuse et la deuxième partie (2) de guide d'ondes lumineuses en ayant sa deuxième surface (2a) de réception de la lumière sur une deuxième source (42) lumineuse, l'évidement et l'élément (10) d'affichage étant assemblés de manière à ce que l'intérieur du boîtier (30) soit, à l'emplacement de montage de l'élément (10), protégé vis-à-vis d'un jet d'eau ou d'une immersion temporaire.

2. Module (20) électronique suivant la revendication 1, dans lequel un moyen (21, 22) de guidage est sous la forme d'une rainure (23, 24) s'étendant en longueur sur le côté (11, 12) intérieur.

3. Module (20) électronique suivant la revendication 1 ou 2, dans lequel un bord (25, 26) d'appui de la plaque (40) de caractérisation s'étend sur les côtés (11, 12) intérieurs.

4. Module (20) électronique suivant la revendication 1 à 3, dans lequel la première partie (1) de guide d'ondes lumineuses et la deuxième partie (2) de guide d'ondes lumineuses sont reliées à une partie (3) médiane et l'agencement de guide d'ondes lumineuses est constitué d'une seule pièce sous la forme d'une pièce en matière plastique.

5. Module (20) électronique suivant l'une des revendications 1 à 4, constitué de manière à pouvoir y mettre le module (20) électronique dans l'évidement du boîtier (30) de façon à ce que l'évidement soit rendu étanche par l'agencement de guide d'ondes lumineuses.
